# EUROPEAN PATENT APPLICATION

(11) **EP 4 461 502 A1**
(43) Date of publication of application: **13.11.2024**
(21) Application number: 22918639.0
(22) Date of filing: 07.01.2022
(51) Int. Cl.: B29C 45/14, F16B 5/02

(54) **RESIN MOLDING AND COLLAR MEMBER**

(71) Applicant: Yorozu Corporation, Yokohama-shi, Kanagawa 222-8560 (JP)
(72) Inventor: KUROI, Yutaka, Yokohama-shi Kanagawa 222-8560 (JP); ARAYA, Shohei, Yokohama-shi Kanagawa 222-8560 (JP)
(74) Representative: Haseltine Lake Kempner LLP
(86) International application number: PCT/JP2022/000334
(87) International publication number: WO 2023/132050

(57) **Abstract**

[Problem] To provide a resin molded article to which a collar member is fitted by insert molding and which enables a reduction in manufacturing costs to be achieved.

[Solution] The resin molded article includes a collar member 60 which is fitted to each of a first fixing part 30 and a second fixing part 40 by insert molding. The collar member is constituted of a rolled collar made of steel and includes a tubular body and an entrance path which guides injection of resin to inside of the tubular body during insert molding. The collar member of a same type is insert-molded to each of the first fixing part and the second fixing part. The first fixing part and the second fixing part respectively include a first mounting hole 33 and a second mounting hole 43 formed by resin injected to the inside of the tubular body via the entrance path. A gap between the first mounting hole and a shaft section 32 of a first bolt 31 is smaller than a gap between the second mounting hole and a shaft section 42 of a second bolt 41 and the first mounting hole is formed as a datum hole.

## Description

### TECHNICAL FIELD

The present invention relates to a resin molded article and a collar member to be insert-molded to the resin molded article.

### BACKGROUND ART

A vehicle includes various resin molded articles mounted to a vehicle body. For example, a pedal bracket for a pedal apparatus is mounted to a dash panel (refer to Patent Literature 1). The pedal bracket is fastened and fixed to the dash panel by a bolt. A collar member made of steel is fitted into a mounting hole of the pedal bracket made of resin by insert molding. An axial force of the bolt is received by the steel collar member.

### Citation List

### Patent Literature

Patent Literature 1: JP 2021-098439 A

### SUMMARY OF INVENTION

### Technical Problem

A resin molded article includes a plurality of mounting holes. The resin molded article is fixed to a mounted body by bolts inserted into the mounting holes. The mounting holes include datum holes that regulate a mounting position of the resin molded article with respect to the mounted body and other holes (the mounting holes other than the datum holes) in which a gap between each hole and a shaft section of a bolt has been increased as compared to the datum holes. A variation in dimensions of the resin molded article is absorbed by the other holes (the mounting holes excluding the datum holes).

When the plurality of mounting holes have different hole diameters, a plurality of collar members with different hole diameters are prepared in advance. A collar member conforming to the hole diameter of a mounting hole is selected and insert-molded. Since a plurality of collar members must be manufactured in this manner, there is a problem in that a cost of resin molded articles increases.

In consideration thereof, an object of the present invention is to provide a resin molded article to which a collar member is fitted by insert molding and which enables a reduction in manufacturing costs to be achieved. Another object of the present invention is to provide a collar member to be insert-molded to a resin molded article that achieves a reduction in manufacturing costs.

### Means for Solving Problem

A resin molded article according to the present invention includes: a body part made of resin; a first fixing part which is formed in the body part and into which a first bolt that fixes the body part to a mounted body is inserted; a second fixing part which is formed in the body part and into which a second bolt that fixes the body part to the mounted body is inserted; and a collar member which is fitted to each of the first fixing part and the second fixing part by insert molding. The collar member is constituted of a rolled collar made of steel and includes a tubular body with a hollow tubular shape and an entrance path which guides injection of resin to inside of the tubular body during insert molding. The collar member of a same type is insert-molded to each of the first fixing part and the second fixing part, the first fixing part includes a first mounting hole formed by the resin injected to the inside of the tubular body via the entrance path of the collar member, and the second fixing part includes a second mounting hole formed by the resin injected to the inside of the tubular body via the entrance path of the collar member. A gap between the first mounting hole and a shaft section of the first bolt is smaller than a gap between the second mounting hole and a shaft section of the second bolt and the first mounting hole is formed as a datum hole.

A collar member according to the present invention is a collar member used in the resin molded article described above and the entrance path includes a path formed between both end surfaces in a rolling direction and a through-hole formed on a wall surface of the tubular body.

### Advantageous Effects of the Invention

Even when collar members of a same type are used, hole diameters of the first mounting hole and the second mounting hole can be optionally changed, the first mounting hole is formed as a datum hole, and the second mounting hole is formed as another hole (a mounting hole other than the datum hole) a so-called play of which has been increased as compared to the first mounting hole. The resin molded article is fixed to the mounted body by having a mounting position with respect to the mounted body being regulated by the first mounting hole which functions as a datum hole and a variation in dimensions being absorbed by the second mounting hole. Since there is no need to prepare collar members with different hole diameters, an increase in costs of the resin molded article can be suppressed. In addition, since the collar member is constituted of a rolled collar, an entrance path for the resin can be readily formed. An increase in costs of the resin molded article can also be suppressed from this perspective. The insert-molded collar member is prevented from becoming detached in an axial direction due to the resin injected to the inside of the tubular body from the entrance path.

Since the collar member is constituted of a rolled collar, an entrance path for the resin can be readily and inexpensively formed by a path formed between both end surfaces in a rolling direction and a through-hole formed on a wall surface of the tubular body.

### BRIEF DESCRIPTION OF DRAWINGS

Fig. 1 is a front view schematically showing a pedal apparatus of a vehicle.
Fig. 2 is a front view showing an enlargement of a part of a body part of a pedal bracket shown in Fig. 1.
Fig. 3A is a sectional view showing a first fixing part together with a first bolt.
Fig. 3B is a sectional view showing a second fixing part together with a second bolt.
Fig. 3C is a sectional view showing a third fixing part together with a third bolt.
Fig. 4A is a perspective view showing a collar member to be fitted to each of the first fixing part, the second fixing part, and the third fixing part by insert molding.
Fig. 4B is a perspective view showing the collar member shown in Fig. 4A in a state where a rear-face side of the collar member is rotated to a front-face side.
Fig. 5A is a sectional view schematically showing a situation where the collar member is insert-molded to the first fixing part.
Fig. 5B is a sectional view schematically showing a situation where the collar member is insert-molded to the first fixing part.

### DESCRIPTION OF EMBODIMENT

Hereinafter, an embodiment of the present invention will be described in detail with reference to the drawings. The embodiment described herein is exemplified in order to embody the technical idea of the present invention and is not intended to limit the present invention. Therefore, all other feasible forms, examples, operational techniques, and the like which are conceivable by those skilled in the art without departing from the gist of the present invention are included in the scope and gist of the present invention, the invention as described in the claims, and an equivalent range thereof.

Furthermore, while the drawings attached to the present specification may be represented schematically by changing a scale, an aspect ratio, a shape, or the like from reality for the sake of convenience of illustration and comprehension, the drawings merely represent an example and are not intended to limit the interpretation of the present invention.

Note that in the present specification, ordinal numbers such as "first" and "second" may be used. However, unless otherwise specifically provided with respect to such ordinal numbers, the ordinal numbers are simply used for convenience of description in order to distinguish among constituent elements and are not intended to specify numbers or sequences.

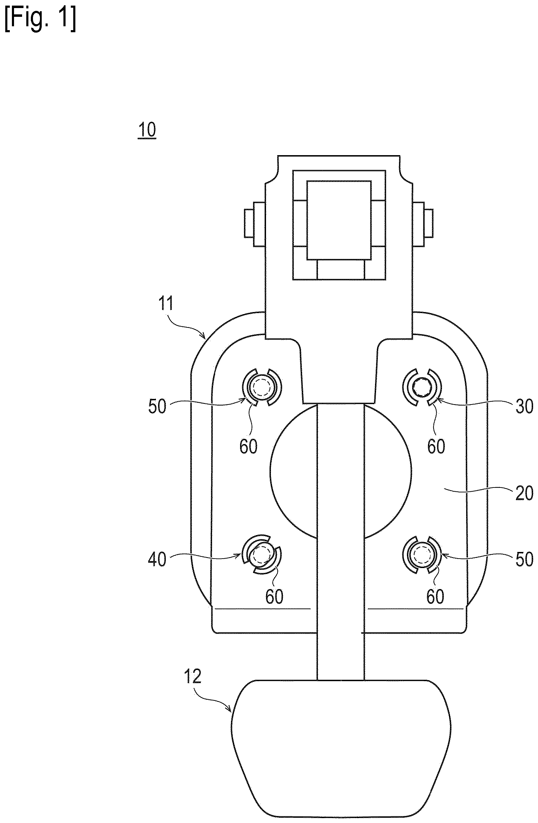

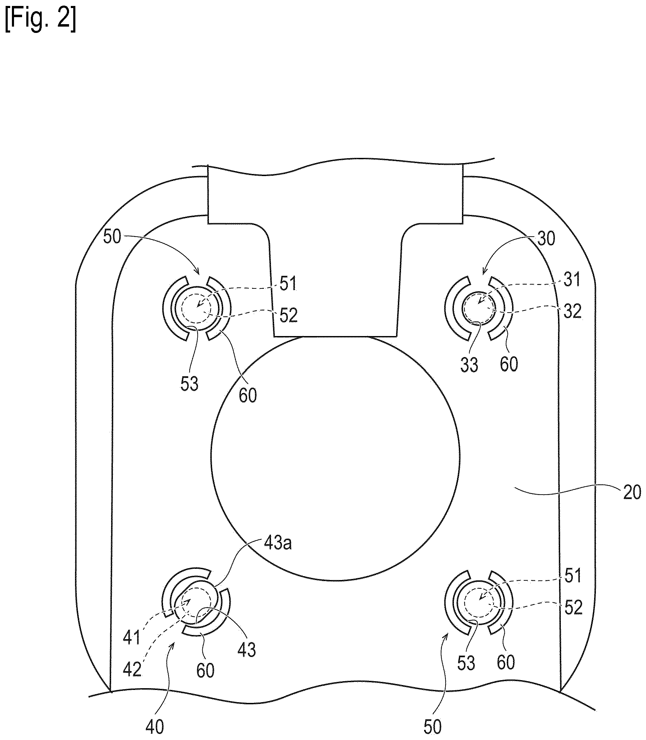

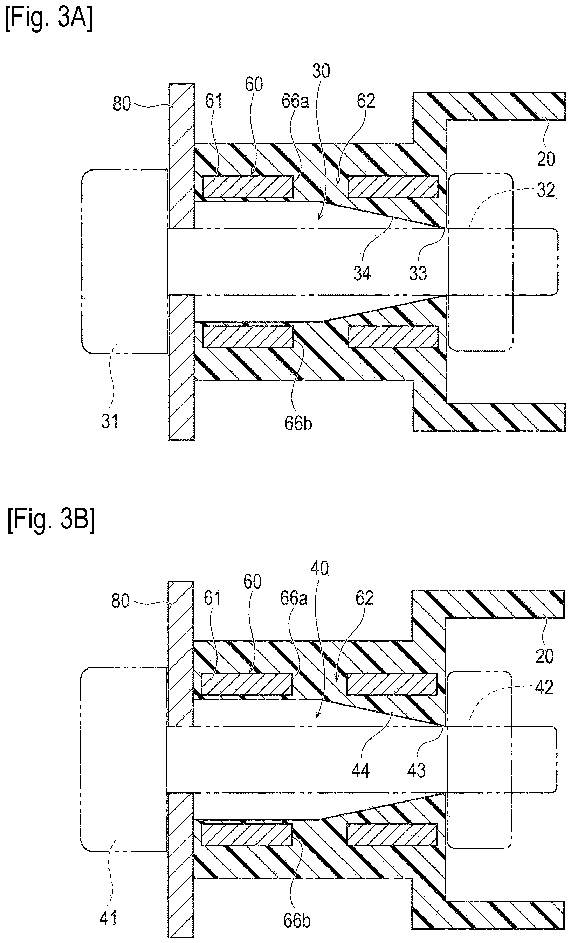

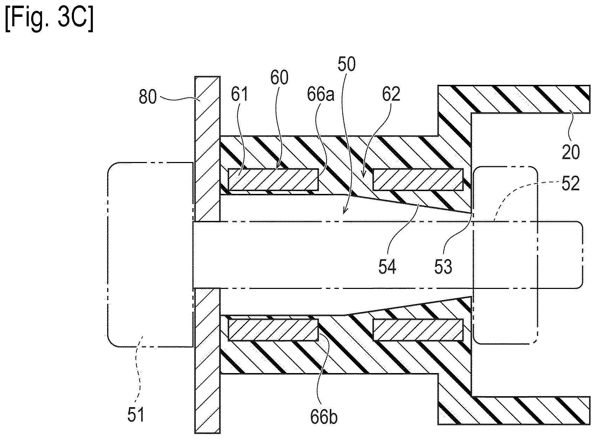

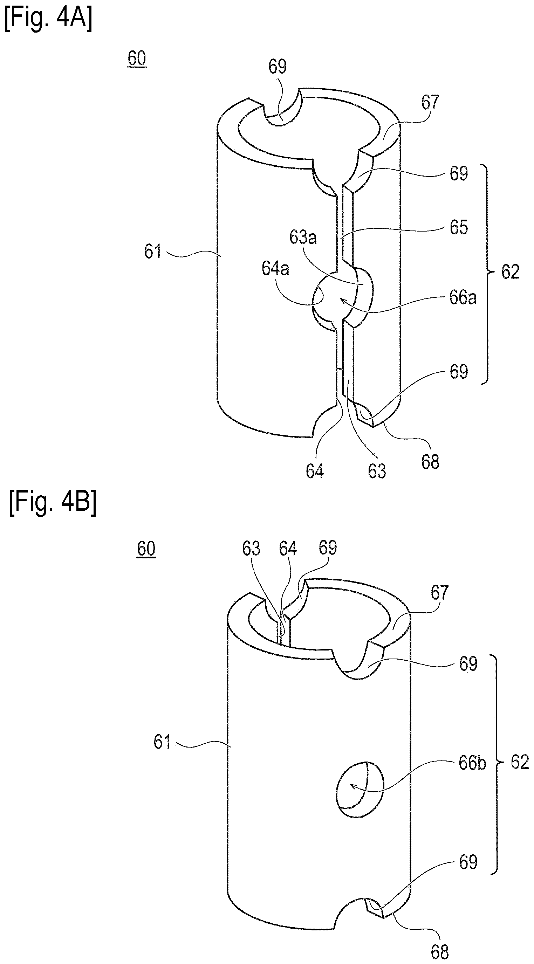

Fig. 1 is a front view schematically showing a pedal apparatus 10 of a vehicle and Fig. 2 is a front view showing an enlargement of a part of a body part 20 of a pedal bracket 11 shown in Fig. 1. Fig. 3A is a sectional view showing a first fixing part 30 together with a first bolt 31, Fig. 3B is a sectional view showing a second fixing part 40 together with a second bolt 41, and Fig. 3C is a sectional view showing a third fixing part 50 together with a third bolt 51. Fig. 4A is a perspective view showing a collar member 60 to be fitted to each of the first fixing part 30, the second fixing part 40, and the third fixing part 50 by insert molding, and Fig. 4B is a perspective view showing the collar member 60 shown in Fig. 4A in a state where a rear-face side of the collar member 60 is rotated to a front-face side.

As shown in Fig. 1, the pedal apparatus 10 of the vehicle includes the pedal bracket 11 (which corresponds to a resin molded article) and an operation pedal 12 which is rotatably supported by the pedal bracket 11. The operation pedal 12 is, for example, a brake pedal.

As shown in Fig. 1 and Fig. 2, generally stated, the pedal bracket 11 includes the body part 20 made of resin, the first fixing part 30 formed in the body part 20, the second fixing part 40 formed in the body part 20, and the collar member 60 fitted to each of the first fixing part 30 and the second fixing part 40 by insert molding. As shown in Fig. 3A, the first bolt 31 which fixes the body part 20 to a vehicle body 80 (which corresponds to a mounted body) is inserted into the first fixing part 30. As shown in Fig. 3B, the second bolt 41 which fixes the body part 20 to the vehicle body 80 is inserted into the second fixing part 40. The vehicle body 80 is a dash panel.

The pedal bracket 11 further includes the third fixing part 50 formed in the body part 20 and the collar member 60 fitted to the third fixing part 50 by insert molding. The illustrated pedal bracket 11 includes two third fixing parts 50. As shown in Fig. 3C, the third bolt 51 which fixes the body part 20 to the vehicle body 80 is inserted into each of the third fixing parts 50.

In the present embodiment, bolts of a same type outer diameter dimensions of shaft sections 32, 42, and 52 of which are the same are used as the first bolt 31, the second bolt 41, and the third bolt 51. Alternatively, bolts with different outer diameter dimensions of the shaft sections 32, 42, and 52 may be used as the first bolt 31, the second bolt 41, and the third bolt 51.

As shown in Fig. 1 and Fig. 2, the first fixing part 30, the second fixing part 40, and the two third fixing parts 50 are arranged so as to be roughly positioned at corners of a rectangle. The first fixing part 30 and the second fixing part 40 are arranged on a diagonal and the two third fixing parts 50 are arranged on a diagonal.

The illustrated pedal bracket 11 includes a total of four collar members 60. All of the four collar members 60 are of a same type. Note that in the present specification, "collar members 60 of a same type" means that at least hole diameters of the collar members 60 are the same. Preferably, lengths of the collar members 60 in an axial direction are also the same.

As shown in Fig. 4A and Fig. 4B, each collar member 60 is constituted of a rolled collar made of steel. The collar member 60 includes a tubular body 61 with a hollow tubular shape and an entrance path 62 which guides injection of resin to inside of the tubular body 61 during insert molding.

Generally, a rolled collar is manufactured by a progressive pressing method including a plurality of press working steps while feeding an elongated steel processed material forward. The press working steps include a trimming step of trimming the processed material to a contour shape of the collar member 60, a bending step of bending and forming the processed material into a cylindrical shape, and a cutting step of separating the bent and formed tubular body 61 from the processed material.

As shown in Fig. 4A, the entrance path 62 of the collar member 60 includes a path 65 which is formed between both end surfaces 63 and 64 in a rolling direction and a through-hole 66a which is constituted of notched parts 63a and 64a formed on both end surfaces 63 and 64 in the rolling direction. The path 65 is formed in the bending step of the rolled collar. The notched parts 63a and 64a which constitute the through-hole 66a are formed in the trimming step of the rolled collar. The through-hole 66a is formed by the notched parts 63a and 64a which are respectively formed on both end surfaces 63 and 64 so as to oppose each other. The notched parts 63a and 64a have a semicircular shape. The through-hole 66a can be constituted of the notched part 63a (or 64a) formed on at least one end surface 63 (or 64) of both end surfaces 63 and 64 in the rolling direction. The shape of the through-hole 66a is not limited to a circular shape and an appropriate shape can be adopted insofar as injection of resin to the inside of the tubular body 61 can be guided during insert molding. For example, the through-hole 66a can have a rectangular shape.

As shown in Fig. 4B, the entrance path 62 further includes a through-hole 66b formed on a wall surface of the tubular body 61. A contour of the through-hole 66b is formed in the trimming step of the rolled collar. The through-hole 66b is formed at a position that faces the through-hole 66a. A shape of the through-hole 66b is not limited to a circular shape and an appropriate shape can be adopted insofar as injection of resin to the inside of the tubular body 61 can be guided during insert molding. For example, the through-hole 66b can have a rectangular shape. The through-hole 66b is not limited to a single hole. A plurality of through-holes 66b can be provided. The through-hole 66b is not limited to being formed at the illustrated position. The through-hole 66b can be formed at an optional position on the wall surface of the tubular body 61 in consideration of a flow of resin during insert molding.

The tubular body 61 includes depressed parts 69 formed on both end surfaces 67 and 68 in the axial direction. The depressed parts 69 are formed when separating the tubular body 61 from the processed material in the cutting step of the rolled collar. The depressed parts 69 also function as the entrance path 62.

When forming a collar member from a steel pipe, a cut in the axial direction must be formed on the wall surface of the tubular body and through-holes must be formed on the wall surface by machining. In other words, the entrance path which guides the injection of resin to the inside of the tubular body of the collar member must be formed by a separate process from the formation of the tubular body. On the other hand, in the present embodiment, when forming the tubular body 61 of the collar member 60 by press molding, the entrance path 62 (the path 65, the through-holes 66a and 66b, and the depressed parts 69) is simultaneously formed. Therefore, in the collar member 60 constituted of a rolled collar, the entrance path 62 can be readily formed by press molding. As a result, the collar member 60 can be inexpensively formed and an increase in costs of the pedal bracket 11 in which the collar member 60 is insert-molded can be suppressed.

The collar member 60 of a same type is insert-molded to each of the first fixing part 30, the second fixing part 40, and the three third fixing parts 50. As shown in Fig. 1, Fig. 2, and Fig. 3A, the first fixing part 30 includes a first mounting hole 33 formed by resin injected to the inside of the tubular body 61 via the entrance path 62 of the collar member 60. As shown in Fig. 1, Fig. 2, and Fig. 3B, the second fixing part 40 includes a second mounting hole 43 formed by resin injected to the inside of the tubular body 61 via the entrance path 62 of the collar member 60. As shown in Fig. 1, Fig. 2, and Fig. 3C, the third fixing parts 50 include a third mounting hole 53 formed by resin injected to the inside of the tubular body 61 via the entrance path 62 of the collar member 60.

A gap between the first mounting hole 33 and the shaft section 32 of the first bolt 31 is smaller than a gap between the second mounting hole 43 and the shaft section 42 of the second bolt 41. The first mounting hole 33 is formed as a datum hole. A mounting position of the pedal bracket 11 with respect to the vehicle body 80 is regulated by the first mounting hole 33 which functions as a datum hole. The second mounting hole 43 has a so-called play between the second mounting hole 43 and the shaft section 42 of the second bolt 41. As a result, the pedal bracket 11 is fixed to the vehicle body 80 by having a variation in dimensions being absorbed by the second mounting hole 43.

As shown in Fig. 2 and Fig. 3A, the first mounting hole 33 has an inner diameter which coincides with an outer diameter of the shaft section 32 of the first bolt 31. Accordingly, the first mounting hole 33 functions as a datum hole. As shown in Fig. 2, the second mounting hole 43 is a long hole 43a with a length that is longer than the outer diameter of the shaft section 42 of the second bolt 41. The long hole 43a extends in a direction toward the first mounting hole 33. A width of the long hole 43a coincides with the outer diameter of the shaft section 42 of the second bolt 41. Fig. 3B shows the second mounting hole 43 in a direction of the width of the long hole 43a. The second mounting hole 43 can absorb a variation in dimensions of the pedal bracket 11 in the direction in which the long hole 43a extends. In other words, the second mounting hole 43 is formed in a shape having a play in the direction in which a variation in dimensions of the pedal bracket 11 occurs. Since the long hole 43a extends in the direction toward the first mounting hole 33, the long hole 43a exerts a function of regulating a position in a direction of rotation of the pedal bracket 11 centered on the first mounting hole 33.

As described above, the second mounting hole 43 specifies a direction in which dimensional variation can be absorbed. Therefore, the first mounting hole 33 functions as a primary datum hole (or a first datum hole) and the second mounting hole 43 functions as a secondary datum hole (or a second datum hole).

Each third mounting hole 53 has an inner diameter which is larger than an outer diameter of the shaft section 52 of the third bolt 51 and which is larger than a gap between the second mounting hole 43 and the shaft section 42 of the second bolt 41 (in the embodiment, a gap in a width-direction of the long hole 43a) . The third mounting hole 53 functions as a so-called clearance hole. Accordingly, the third mounting hole 53 can absorb a variation in dimensions of the pedal bracket 11 when fixing the pedal bracket 11 to the vehicle body 80.

The first mounting hole 33, the second mounting hole 43, and the third mounting hole 53 are formed by resin injected to the inside of the tubular body 61 via the entrance path 62. Shapes (circular shape and long-hole shape) and hole diameters of the first mounting hole 33, the second mounting hole 43, and the third mounting hole 53 can be optionally changed according to a mold structure during resin molding. Therefore, the collar members 60 of one type with the same hole diameters need only be prepared.

As shown in Fig. 3A, the first fixing part 30 includes a first guide surface 34 which guides the first bolt 31 toward the first mounting hole 33. As shown in Fig. 3B, the second fixing part 40 includes a second guide surface 44 which guides the second bolt 41 toward the second mounting hole 43. As shown in Fig. 3C, the third fixing part 50 includes a third guide surface 54 which guides the third bolt 51 toward the third mounting hole 53. While being guided by the first guide surface 34, the first bolt 31 is passed through the first mounting hole 33 and inserted into the first fixing part 30. In a similar manner, while being guided by the second guide surface 44, the second bolt 41 is passed through the second mounting hole 43 and inserted into the second fixing part 40. While being guided by the third guide surface 54, the third bolt 51 is passed through the third mounting hole 53 and inserted into the third fixing part 50. When fixing the pedal bracket 11 to the vehicle body 80, the first bolt 31, the second bolt 41, and the third bolt 51 can be readily inserted and mounting work of the pedal bracket 11 can be readily performed.

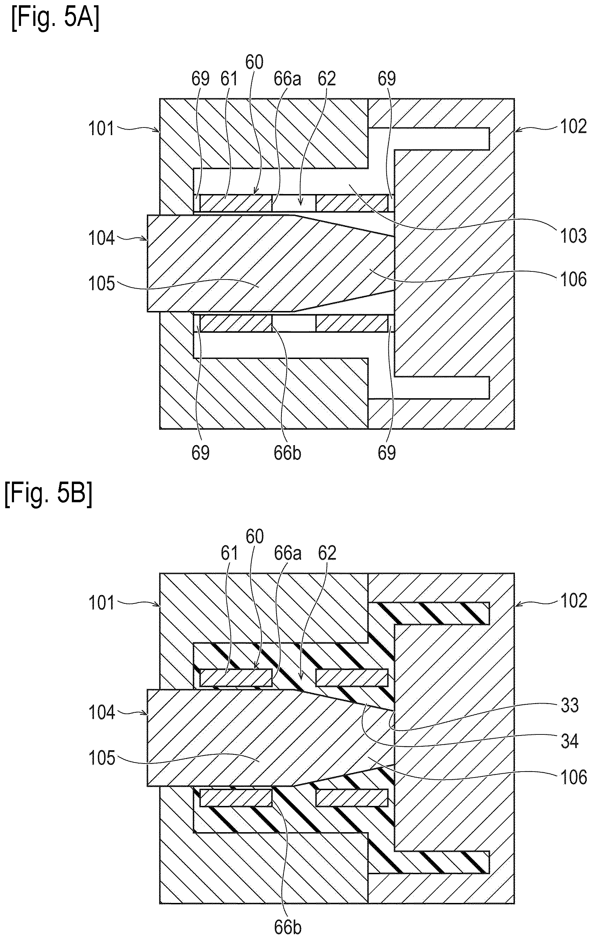

Fig. 5A and Fig. 5B are sectional views schematically showing a situation where the collar member 60 is insert-molded to the first fixing part 30.

As shown in Fig. 5A, the pedal bracket 11 is molded using a first forming mold 101 and a second forming mold 102 which are relatively openable and closable. When the first forming mold 101 and the second forming mold 102 are clamped, a cavity 103 coinciding with an outer shape of the pedal bracket 11 is formed. The collar member 60 is positioned and set at a predetermined position inside the cavity 103. The first forming mold 101 includes a slide mold 104 to be inserted into the tubular body 61 of the collar member 60. The slide mold 104 is arranged in the first forming mold 101 so as to be reciprocally movable with respect to the collar member 60. The slide mold 104 has a tapered pin shape and includes a large-diameter part 105 positioned on a base end side to the left in the drawing and a reduced-diameter part 106 with a diameter that gradually decreases toward a leading end side to the right in the drawing. The large-diameter part 105 extends to positions of the through-holes 66a and 66b of the collar member 60. A space with a constant thickness is formed between an outer circumferential surface of the large-diameter part 105 and an inner circumferential surface of the tubular body 61. A space with a thickness that gradually increases toward the leading end side is formed between an outer circumferential surface of the reduced-diameter part 106 and the inner circumferential surface of the tubular body 61. The reduced-diameter part 106 has an outer shape that forms the first guide surface 34. The leading end of the reduced-diameter part 106 has an outer shape that forms the first mounting hole 33.

When molding the pedal bracket 11, first, the first forming mold 101 and the second forming mold 102 are relatively opened and the collar member 60 is set to a predetermined position. The first forming mold 101 and the second forming mold 102 are closed and the slide mold 104 is inserted into the tubular body 61 of the collar member 60.

As shown in Fig. 5B, in a clamped state, molten resin is injected into the cavity 103 via a gate (not illustrated). The molten resin flows inside the cavity 103 and reaches an outer circumference of the tubular body 61 of the collar member 60. The molten resin is guided through the entrance path 62 (the path 65, the through-holes 66a and 66b, and the depressed parts 69) of the collar member 60 and injected inside the tubular body 61. The molten resin is injected into a space between the inner circumferential surface of the tubular body 61 and an outer circumferential surface of the slide mold 104. In this manner, the collar member 60 is insert-molded to the first fixing part 30. Furthermore, in the first fixing part 30, the first guide surface 34 is formed by the reduced-diameter part 106 and the first mounting hole 33 is formed by the leading end of the reduced-diameter part 106.

The collar member 60 of a same type is insert-molded to the second fixing part 40 and the third fixing part 50 in a similar manner. Furthermore, in the second fixing part 40 and the third fixing part 50, the second guide surface 44 and the third guide surface 54 are formed and the second mounting hole 43 and the third mounting hole 53 are formed.

After the molten resin solidifies, the slide mold 104 is retracted from inside the tubular body 61 of the collar member 60 and the first forming mold 101 and the second forming mold 102 are relatively opened. Molding is finished by demolding the pedal bracket 11.

The insert-molded collar member 60 is prevented from becoming detached in an axial direction from each of the first fixing part 30, the second fixing part 40, and the third fixing part 50 due to resin having entered the entrance path 62 (the path 65, the through-holes 66a and 66b, and the depressed parts 69) .

The collar member 60 of a same type is insert-molded to each of the first fixing part 30, the second fixing part 40, and the third fixing part 50. The first mounting hole 33, the second mounting hole 43, and the third mounting hole 53 are formed by resin injected to the inside of the tubular body 61 via the entrance path 62. Therefore, by changing the outer shape of the slide mold 104, the shapes (circular shape and long-hole shape) and hole diameters of the first mounting hole 33, the second mounting hole 43, and the third mounting hole 53 can be optionally changed. Therefore, since collar members 60 of one type with the same hole diameters need only be prepared, an increase in costs of the pedal bracket 11 can be suppressed.

As described above, the pedal bracket 11 includes: the body part 20 made of resin; the first fixing part 30 which is formed in the body part 20 and into which the first bolt 31 that fixes the body part 20 to the vehicle body 80 is inserted; the second fixing part 40 which is formed in the body part 20 and into which the second bolt 41 that fixes the body part 20 to the vehicle body 80 is inserted; and the collar member 60 which is fitted to each of the first fixing part 30 and the second fixing part 40 by insert molding. The collar member 60 is constituted of a rolled collar made of steel and includes the tubular body 61 with a hollow tubular shape and the entrance path 62 which guides injection of resin to the inside of the tubular body 61 during insert molding. The collar member 60 of a same type is insert-molded to each of the first fixing part 30 and the second fixing part 40, the first fixing part 30 includes the first mounting hole 33 formed by resin injected to the inside of the tubular body 61 via the entrance path 62 of the collar member 60, and the second fixing part 40 includes the second mounting hole 43 formed by resin injected to the inside of the tubular body 61 via the entrance path 62 of the collar member 60. A gap between the first mounting hole 33 and the shaft section 32 of the first bolt 31 is smaller than a gap between the second mounting hole 43 and the shaft section 42 of the second bolt 41 and the first mounting hole 33 is formed as a datum hole.

By adopting such a configuration, even when collar members 60 of a same type are used, hole diameters of the first mounting hole 33 and the second mounting hole 43 can be optionally changed, the first mounting hole 33 is formed as a datum hole, and the second mounting hole 43 is formed as another hole (a mounting hole other than the datum hole) a so-called play of which has been increased as compared to the first mounting hole 33. The pedal bracket 11 is fixed to the vehicle body 80 by having a mounting position with respect to the vehicle body 80 being regulated by the first mounting hole 33 which functions as a datum hole and a variation in dimensions being absorbed by the second mounting hole 43. Since there is no need to prepare collar members 60 with different hole diameters, an increase in costs of the pedal bracket 11 can be suppressed. In addition, since the collar member 60 is constituted of a rolled collar, the entrance path 62 for resin can be readily formed. An increase in costs of the pedal bracket 11 can also be suppressed from this perspective. The insert-molded collar member 60 is prevented from becoming detached in an axial direction due to the resin injected to the inside of the tubular body 61 from the entrance path 62.

The first mounting hole 33 has an inner diameter which coincides with an outer diameter of the shaft section 32 of the first bolt 31. The second mounting hole 43 is the long hole 43a with a length that is longer than the outer diameter of the shaft section 42 of the second bolt 41. The long hole 43a extends in a direction toward the first mounting hole 33. By adopting such a configuration, the first mounting hole 33 functions as a datum hole. The second mounting hole 43 can absorb a variation in dimensions of the pedal bracket 11 in a direction in which the long hole 43a extends when fixing the pedal bracket 11 to the vehicle body 80. Since the long hole 43a extends in the direction toward the first mounting hole 33, the long hole 43a can regulate a position in a direction of rotation of the pedal bracket 11 centered on the first mounting hole 33.

The first fixing part 30 includes the first guide surface 34 which guides the first bolt 31 toward the first mounting hole 33 and the second fixing part 40 includes the second guide surface 44 which guides the second bolt 41 toward the second mounting hole 43. By adopting such a configuration, the first bolt 31 is passed through the first mounting hole 33 and inserted into the first fixing part 30 while being guided by the first guide surface 34. In a similar manner, the second bolt 41 is passed through the second mounting hole 43 and inserted into the second fixing part 40 while being guided by the second guide surface 44. When fixing the pedal bracket 11 to the vehicle body 80, the first bolt 31 and the second bolt 41 can be readily inserted and mounting work of the pedal bracket 11 can be readily performed.

The pedal bracket 11 further includes the third fixing part 50 which is formed in the body part 20 and into which the third bolt 51 that fixes the body part 20 to the vehicle body 80 is inserted. The collar member 60 of a same type is insert-molded to the third fixing part 50, and the third fixing part 50 includes the third mounting hole 53 formed by resin injected to the inside of the tubular body 61 via the entrance path 62 of the collar member 60. The third mounting hole 53 has an inner diameter which is larger than an outer diameter of the shaft section 52 of the third bolt 51 and which is larger than a gap between the second mounting hole 43 and the shaft section 42 of the second bolt 41. By adopting such a configuration, the third mounting hole 53 can absorb a variation in dimensions of the pedal bracket 11 when fixing the pedal bracket 11 to the vehicle body 80.

The third fixing part 50 includes the third guide surface 54 which guides the third bolt 51 toward the third mounting hole 53. By adopting such a configuration, the third bolt 51 is passed through the third mounting hole 53 and inserted into the third fixing part 50 while being guided by the third guide surface 54. When fixing the pedal bracket 11 to the vehicle body 80, the third bolt 51 can be readily inserted and mounting work of the pedal bracket 11 can be readily performed.

The entrance path 62 of the collar member 60 includes the path 65 formed between both end surfaces 63 and 64 in a rolling direction and the through-hole 66a constituted of the notched part 63a (or 64a) formed on at least one end surface 63 (or 64) of both end surfaces 63 and 64 in the rolling direction. By adopting such a configuration, the collar member 60 constituted of a rolled collar can readily and inexpensively form the entrance path 62 for resin using the path 65 and the through-hole 66a. An increase in costs of the pedal bracket 11 can also be suppressed from this perspective.

The entrance path 62 further includes the through-hole 66b formed on the wall surface of the tubular body 61. By adopting such a configuration, the collar member 60 constituted of a rolled collar can readily and inexpensively form the entrance path 62 for resin further using the through-hole 66b. An increase in costs of the pedal bracket 11 can also be suppressed from this perspective.

The body part 20 constitutes the body part 20 of the pedal bracket 11 for the pedal apparatus 10 of a vehicle and the mounted body is the vehicle body 80. By adopting such a configuration, the pedal bracket 11 an increase in costs of which are suppressed can be provided.

The collar member 60 used in a resin molded article such as the pedal bracket 11 described above, in which the entrance path 62 includes the path 65 formed between both end surfaces 63 and 64 in a rolling direction and the through-hole 66a constituted of the notched part 63a (or 64a) formed on at least one end surface 63 (or 64) of both end surfaces 63 and 64 in the rolling direction. By adopting such a configuration, the collar member 60 constituted of a rolled collar can readily and inexpensively form the entrance path 62 for resin using the path 65 and the through-hole 66a.

The entrance path 62 further includes the through-hole 66b formed on the wall surface of the tubular body 61. By adopting such a configuration, the collar member 60 constituted of a rolled collar can readily and inexpensively form the entrance path 62 for resin further using the through-hole 66b.

The present invention is not limited to the embodiment described above and various modifications can be made. For example, while a case where the second mounting hole 43 is the linear long hole 43a has been described, the shape of the second mounting hole 43 is not limited to this shape. The second mounting hole 43 can be formed in a circular shape with an inner diameter that is longer than the outer diameter of the shaft section 42 of the second bolt 41 in a similar manner to the third mounting hole 53. In addition, a resin molded article may include the body part 20 which is allowed to be fixed at a position having been slightly rotated around the first mounting hole 33 as a datum hole. In such a case, the second mounting hole 43 can be formed in a long hole with an arc shape centered on the first mounting hole 33. It is needless to say that the resin molded article is not limited to the pedal bracket 11.

### Reference Signs List

10: pedal apparatus
11: pedal bracket (resin molded article)
12: operation pedal
20: body part
30: first fixing part
31: first bolt
32: shaft section
33: first mounting hole
34: first guide surface
40: second fixing part
41: second bolt
42: shaft section
43: second mounting hole
43a: long hole
44: second guide surface
50: third fixing part
51: third bolt
52: shaft section
53: third mounting hole
54: third guide surface
60: collar member
61: tubular body
62: entrance path
63, 64: end surface in rolling direction
63a, 64a: notched part
65: path (entrance path)
66a: through-hole (entrance path)
66b: through-hole (entrance path)
67, 68: end surface in axial direction
69: depressed part (entrance path)
80: vehicle body (mounted body)
101: first forming mold
102: second forming mold
103: cavity
104: slide mold
105: large-diameter part
106: reduced-diameter part

## Claims

1. A resin molded article, comprising:
a body part made of resin;
a first fixing part which is formed in the body part and into which a first bolt that fixes the body part to a mounted body is inserted;
a second fixing part which is formed in the body part and into which a second bolt that fixes the body part to the mounted body is inserted; and
a collar member which is fitted to each of the first fixing part and the second fixing part by insert molding, wherein
the collar member is constituted of a rolled collar made of steel and includes a tubular body with a hollow tubular shape and an entrance path which guides injection of resin to inside of the tubular body during insert molding,
the collar member of a same type is insert-molded to each of the first fixing part and the second fixing part, the first fixing part including a first mounting hole formed by the resin injected to the inside of the tubular body via the entrance path of the collar member, the second fixing part including a second mounting hole formed by the resin injected to the inside of the tubular body via the entrance path of the collar member, and
a gap between the first mounting hole and a shaft section of the first bolt is smaller than a gap between the second mounting hole and a shaft section of the second bolt and the first mounting hole is formed as a datum hole.

2. The resin molded article according to claim 1, wherein
the first mounting hole has an inner diameter which coincides with an outer diameter of the shaft section of the first bolt,
the second mounting hole is a long hole with a length which is longer than an outer diameter of the shaft section of the second bolt, and
the long hole extends in a direction toward the first mounting hole.

3. The resin molded article according to claim 1 or 2, wherein
the first fixing part includes a first guide surface which guides the first bolt toward the first mounting hole, and
the second fixing part includes a second guide surface which guides the second bolt toward the second mounting hole.

4. The resin molded article according to any one of claims 1 to 3, further comprising:
a third fixing part which is formed in the body part and into which a third bolt that fixes the body part to the mounted body is inserted, wherein
the collar member of a same type is insert-molded to the third fixing part, the third fixing part including a third mounting hole formed by the resin injected to the inside of the tubular body via the entrance path of the collar member, and
the third mounting hole has an inner diameter which is larger than an outer diameter of a shaft section of the third bolt and which is larger than a gap between the second mounting hole and the shaft section of the second bolt.

5. The resin molded article according to claim 4, wherein the third fixing part includes a third guide surface which guides the third bolt toward the third mounting hole.

6. The resin molded article according to any one of claims 1 to 5, wherein the entrance path of the collar member includes a path formed between both end surfaces in a rolling direction and a through-hole constituted of a notched part formed on at least one end surface of both end surfaces in the rolling direction.

7. The resin molded article according to claim 6, wherein the entrance path further includes a through-hole formed on a wall surface of the tubular body.

8. The resin molded article according to any one of claims 1 to 7, wherein the body part constitutes a body part of a pedal bracket for a pedal apparatus of a vehicle and the mounted body is a vehicle body.

9. A collar member used in the resin molded article according to any one of claims 1 to 5, wherein the entrance path includes a path formed between both end surfaces in a rolling direction and a through-hole constituted of a notched part formed on at least one end surface of both end surfaces in the rolling direction.

10. The collar member according to claim 9, wherein the entrance path further includes a through-hole formed on a wall surface of the tubular body.
